(19) Europäisches Patentamt
European Patent Office
Office européen des brevets

(11) EP 2 034 638 A1

(12) **EUROPEAN PATENT APPLICATION**

(43) Date of publication:
**11.03.2009 Bulletin 2009/11**

(21) Application number: **08015237.4**

(22) Date of filing: **28.08.2008**

(51) Int Cl.:
***H04B 17/00*** *(2006.01)* ***H04L 25/02*** *(2006.01)*
***H04L 27/26*** *(2006.01)*

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.09.2007 JP 2007230947**

(71) Applicant: **NEC Corporation**
**Minato-ku**
**Tokyo (JP)**

(72) Inventors:
- **Naito, Kosuke**
  **Minato-ku,**
  **Tokyo (JP)**
- **Iwasaki, Motoya**
  **Minato-ku,**
  **Tokyo (JP)**

(74) Representative: **Glawe, Delfs, Moll**
**Patentanwälte**
**Postfach 26 01 62**
**80058 München (DE)**

(54) **Method and device for estimating reception quality in radio communication**

(57) A reception quality estimation device includes: a correlation extractor for extracting correlation between multiplexed reception reference signals received from the plurality of user terminals and a predetermined reference signal sequence, wherein extracted correlation corresponds to each user terminal; a received power calculator for calculating received signal power from the extracted correlation corresponding to each user terminal; a total received power calculator for calculating total received signal power by summing up the received signal power for all the plurality of user terminals; a noise power estimator for estimating noise power based on the total received signal power and total received power of multiplexed reception reference signals; and a reception quality calculator for calculating the reception quality of each user terminal based on the received signal power and the noise power.

FIG. 4A

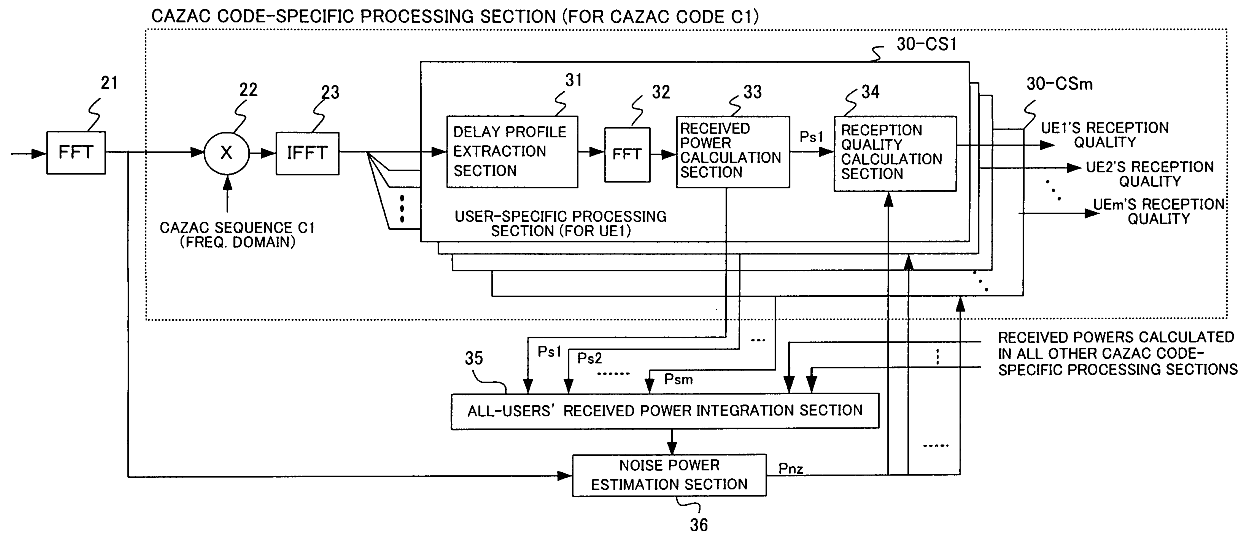


EP 2 034 638 A1

## Description

This application is based upon and claims the benefit of priority from Japanese Patent Application No. 2007-230947, filed on September 6, 2007, the disclosure of which is incorporated herein in its entirety by reference.

The present invention relates to a radio communications system and, more particularly, to a method and device for estimating reception quality.

The 3rd Generation Partnership Project (3GPP), which is a collaboration between organizations aiming to standardize radio communications systems, has been studying Long Term Evolution (LTE), which provides a high-data-rate, low-latency, and packet-optimized radio-access technology, as a successor to the current W-CDMA systems. In LTE, single-carrier transmission is adopted as the uplink access scheme in broadband radio access. With low peak to average power ratio (PAPR), the single-carrier transmission is excellent in power efficiency, compared with multi-carrier transmission such as Orthogonal Frequency Division Multiplexing (OFDM). Hence, the single-carrier transmission is an access scheme suitable for the uplink from a user terminal (also referred to as UE (user equipment)), which has limited battery capacity, to a base station (also referred to as "Node B" or "eNB").

Moreover, for uplink reference signal sequences, Constant Amplitude Zero Auto-Correlation (CAZAC) sequences are used. The CAZAC sequences are sequences having constant amplitude in time domain as well as in the frequency domain and also having zero autocorrelation except when the phase difference is zero. Because of the constant amplitude in time domain, the CAZAC sequences can achieve low PAPR, and because of the constant amplitude in the frequency domain, the CAZAC sequences are suitable for frequency-domain channel estimation. As an example of the CAZAC sequences, Zadoff-Chu sequence (hereinafter, referred to as "ZC sequence") can be cited, which are represented by the following equation (see 3GPP TS36.211 v1.2.1):

$$x_k(n) = \exp(-j\pi k n[n+1]/L)$$

In time domain, CAZAC sequences are represented by the following equation (see Popovic, B. M., "Generalized Chirp-Like Polyphase Sequences with Optimum Correlation Properties," IEEE Transactions on Information Theory, July 1992, Vol. 38, No. 4, pp. 1406-1409):

$$c_k(n) = \begin{cases} \exp\left[\dfrac{j2\pi k}{L}\left(\dfrac{n^2}{2}+n\right)\right] & \text{when L is an even number} \\ \exp\left[\dfrac{j2\pi k}{L}\left(n\dfrac{n+1}{2}+n\right)\right] & \text{when L is an odd number} \end{cases}$$

where L is the sequence length of a CAZAC sequence, n is an element number (0, 1, ..., L - 1) in the CAZAC sequence, and k is a sequence number of the CAZAC sequence and is an integer prime to L. The number of CAZAC sequences is dependent on the length of the CAZAC sequences. In the case of the above-mentioned ZC sequence, when the sequence length L is a prime number, the number of sequences is L - 1, which is the maximum. That is, the shorter the sequence length, the smaller the number of different CAZAC sequences.

When CAZAC sequences are used for uplink reference signal sequences, Code Division Multiplexing (CDM) is used to multiplex the reference signals of multiple mobile stations (see 3GPP R1-060925, Texas Instruments, "Comparison of Proposed Uplink Pilot Structures For SC-OFDMA," March 2006). In CDM of reference signals, users use CAZAC sequences of the same length respectively, and orthogonality between the reference signals can be accomplished by a cyclic shift unique to each user (or antenna). Hereinafter, a brief description will be given of cyclic shifts.

1) Cyclic shift

FIG. 1 is a schematic diagram to describe cyclic shifts based on a CAZAC sequence. Referring to FIG. 1, assuming that a CAZAC sequence $C_1$ is a sequence 1, a sequence 2 is generated by shifting the sequence 1 rightward and relocating the shifted-out part at the end of the sequence 1 to the top of the sequence 1. Moreover, a sequence 3 is generated by shifting the sequence 2 rightward and relocating the shifted-out part at the end of the sequence 2 to the top of the sequence 2. By sequentially shifting the sequence in a ring manner as described above, sequences 4, 5 and 6 are generated. This is called cyclic shifts, and CAZAC sequences generated by cyclic shifts are referred to as cyclic-shift sequences. Hereinafter, cyclic-shift sequences will be represented by $S_1$, $S_2$ and so on by using numbers that indicate shifted amounts.

Since the autocorrelation value of CAZAC sequences is always zero except when the phase difference is zero as mentioned above, orthogonality between multiple reference signals can be accomplished even in a multi-path environment by making the amount of a cyclic shift to be relocated from the end of a sequence to the top thereof equal to or larger than a supposed maximum delay path time. For example, in a propagation path model according to LTE, since the maximum delay path time is approximately 5 μsec and a single long block is 66.6 μsec long, it is possible to use, logically, 13 cyclic-shift sequences from the calculation of 66.6/5. However, it is thought that approximately six cyclic-shift sequences can be orthogonalized in actuality because an impulse response is broadened along a path due to the influence of a filter and the like (see 3GPP R1-071294, Qualcomm Europe, "Link Analysis and Multiplexing Capability for CQI Transmission," March 2007).

2) Reference signal

In LTE, reference signals (hereinafter, abbreviated as "RS" where appropriate) for the uplink can be broadly classified into three types: reference signals for demodulating Physical Uplink Shared Channel (PUSCH), which mainly transmits data, reference signals for demodulating Physical Uplink Control Channel (PUCCH), which transmits a control signal, and reference signals for measuring uplink channel quality or reference signals for CQI measurement (hereinafter, referred to as "sounding reference signal").

FIG. 2A is a format diagram showing an example of resource allocation in a slot including PUSCH and PUCCH, demodulation reference signals for PUSCH and PUCCH, and a sounding reference signal. One slot is composed of seven blocks. Resource blocks (RB) on the edges of the entire band are allocated to PUCCH. PUCCH and PUSCH are multiplexed by Frequency Division Multiplexing (FDM). Additionally, one resource block includes 12 sub-carriers.

Moreover, PUCCH and the demodulation reference signal for PUCCH, as well as PUSCH and the demodulation reference signal for PUSCH, are multiplexed by Time Division Multiplexing (TDM) in their respective bands. The sounding reference signal is assigned a resource using the system band, independently of the demodulation reference signals for PUCCH and PUSCH.

In PUCCH transmission as shown in FIG. 2A, to obtain a larger frequency diversity effect, it is defined in standardization to use CDM to multiplex users spreading over the PUCCH band. In this event, orthogonality between the users can be accomplished as in the above-described CDM of reference signals, by employing CAZAC sequences for the sequences to be used as spreading codes.

Moreover, in multiplexing of user's reference signals for PUCCH demodulation, CDM is also used because a number of CAZAC sequences can be secured without a reduction in the sequence length of the reference signals. However, PUCCH needs to be used for not only a user terminal (UE) that has received downlink data to transmit ACK/NACK but also a user terminal (UE) waiting for scheduled downlink data transmission to transmit CQI, which indicates the quality of a downlink for the user. Accordingly, a reference signal for PUCCH demodulation is separated into ACK/NACK use and CQI use.

3) Generation of reference signal sequence

FIG. 2B is a block diagram showing a functional configuration of a reference signal sequence generation circuit. As described above, a PUCCH control signal is spread by using a CAZAC sequence in frequency domain. First, a sub-carrier mapping section 11 maps a frequency-domain CAZAC sequence to a predetermined sub-carrier, which is then transformed into a time-domain signal by an inverse fast Fourier transform (IFFT) section 12. Subsequently, a cyclic shift section 13 applies to the time-domain CAZAC sequence signal a cyclic shift of one of the six patterns shown in FIG. 1, for example, that is assigned to the user terminal in question. A cyclic prefix insertion section 14 adds a cyclic prefix (CP) to the thus-obtained time-domain CAZAC sequence signal, whereby a reference signal is generated.

4) Estimation of reception quality

For channel estimation for multiple user terminals UEs multiplexed by CDM, a frequency-domain cross-correlation method can be used (see, Figure 2 in 3GPP R1-070359 NEC Group, "Definition of Cyclic Shift in Code Division Multiplexing," January 2007). As an example, a description will be given of channel estimation for four user terminals UE1 to UE4.

FIG. 3A is a block diagram showing a basic configuration of a multi-user channel estimation device. Referring to FIG. 3A, after a CP deletion section 20 deletes cyclic prefixes (CP) from received signals to output reference signals, a fast Fourier transform (FFT) section 21 transforms the reference signals into frequency-domain signals. Subsequently, a multiplication processing section 22 carries out complex multiplication of the frequency-domain signals with a single CAZAC sequence which has been similarly transformed into frequency domain. An inverse fast Fourier transform (IFFT) section 23 retransforms the result of this multiplication to time domain, whereby cross-correlation signals pursuant to the respective cyclic shift delays assigned to the user terminals UE1 to UE4 can be obtained. In accordance with the uplink or downlink signal reception qualities thus estimated, data rate control is performed.

When each user's reception quality is estimated from the cross-correlation signal obtained by the frequency-domain cross-correlation method shown in FIG. 3A, the following procedure is needed. First, a received signal power is determined for a user in question, based on a received signal in frequency domain, and a received noise component is calculated by subtracting the determined received signal power from the received signal in frequency domain. A reception quality for the user in question is determined by calculating the ratio between the received signal power and the received noise component. For example, assuming that a reference signal exists only in the time period or frequency band in which a user transmits data, it is necessary to estimate a reception quality for each user completely independently of the other users, as shown in FIG. 3B.

FIG. 3B is a block diagram showing an implementation example of the basic configuration shown in FIG. 3A. To estimate a reception quality for each user completely independently of the other users, after each received signal is transformed to frequency domain by the FFT section 21, a cross-correlation signal in time domain is obtained for each user through the multiplication processing section 22 and IFFT section 23. After the signal quality of this cross-correlation signal is improved by a noise reduction section 24, the signal is transformed again into frequency-domain signals by a FFT section 25. A received power calculation section 26 calculates a received power Ps on frequency axis, which is then output to each of a subtraction processing section 27 and a reception quality calculation section 28.

The subtraction processing section 27 subtracts the received power calculated for the user in question by the received power calculation section 26, from the received power of the frequency-domain cross-correlation signal obtained by the multiplication processing section 22 through cross-correlation processing, thereby obtaining a noise power Pnz. The subtraction processing section 27 outputs the obtained noise power Pnz to the reception quality calculation section 28. The reception quality calculation section 28 calculates the ratio between the received power Ps and the noise power Pnz in the frequency domain and estimates a reception quality for the user in question.

However, according to the circuitry shown in FIG. 3B, optimal processing cannot be performed for each of control and reference signals in a channel structure like those under consideration in standardization in which control signals, as well as reference signals, are multiplexed by CDM. Moreover, the noise reduction section 24 for performing noise reduction processing on time axis is required for each user to enhance accuracy in the estimation of reception quality. The noise reduction section 24 uses a band-limiting filter and therefore performs complicated processing.

Furthermore, in the case where different multiplexing schemes are adopted for uplink control signals and data signals, if the estimation of the reception quality of a control signal is performed by using circuitry similar to a data signal reception circuit, then processing suitable for the characteristics of the control signal multiplexing scheme cannot be performed, resulting in the efficiency being degraded.

Accordingly, an object of the present invention is to provide a reception quality estimation method and device by which reception quality estimation can be performed efficiently.

According to an aspect of the present invention, a device for estimating reception quality for each of a plurality of user terminals, includes: a correlation extractor for extracting correlation between multiplexed reception reference signals received from the plurality of user terminals and a predetermined reference signal sequence, wherein extracted correlation corresponds to each user terminal; a received power calculator for calculating received signal power from the extracted correlation corresponding to each user terminal; a total received power calculator for calculating total received signal power by summing up the received signal power for all the plurality of user terminals; a noise power estimator for estimating noise power based on the total received signal power and total received power of multiplexed reception reference signals; and a reception quality calculator for calculating the reception quality of each user terminal based on the received signal power and the noise power.

According to another aspect of the present invention, a method for estimating reception quality for each of a plurality of user terminals, includes: extracting correlation between multiplexed reception reference signals received from the plurality of user terminals and a predetermined reference signal sequence, wherein extracted correlation corresponds to each user terminal; calculating received signal power from the extracted correlation corresponding to each user terminal; calculating total received signal power by summing up the received signal power for all the plurality of user terminals; estimating noise power based on the total received signal power and total received power of multiplexed reception reference signals; and calculating the reception quality of each user terminal based on the received signal power and the noise power.

According to the present invention, it is possible to efficiently estimate each user's reception quality from multiplexed reference signals of multiple user terminals.

FIG. 1 is a schematic diagram to describe cyclic shifts based on a CAZAC sequence.
FIG. 2A is a format diagram showing an example of resource allocation in a slot including PUSCH and PUCCH, demodulation reference signals for PUSCH and PUCCH, and a sounding reference signal.
FIG. 2B is a block diagram showing a functional configuration of a reference signal sequence generation circuit.
FIG. 3A is a block diagram showing a basic configuration of a multi-user channel estimation device.
FIG. 3B is a block diagram showing an implementation example of the basic configuration shown in FIG. 3A.
FIG. 4A is a block diagram showing a functional configuration of a reception quality estimation device according to an exemplary embodiment of the present invention.
FIG. 4B is a diagram of signal waveforms in time domain showing cross-correlation.
FIG. 5 is a block diagram showing a specific example of the reception quality estimation device shown in FIG. 4A.
FIG. 6A is a flow chart showing a first example of user-specific delay profile extraction operation in the present exemplary embodiment.
FIG. 6B is a flow chart showing a second example of user-specific delay profile extraction operation in the present exemplary embodiment.

According to an exemplary embodiment of the present invention, reception qualities for multiple users based on a single CAZAC code are collectively estimated, whereby greater efficiency and higher accuracy in reception quality estimation processing can be achieved. Hereinafter, the exemplary embodiment of the present invention will be described in detail by using the accompanying drawings.

FIG. 4A is a block diagram showing a functional configuration of a reception quality estimation device according to an exemplary embodiment of the present invention. FIG. 4B is a diagram of signal waveforms in time domain showing cross-correlation. According to the present exemplary embodiment, subsequent to a fast Fourier transform (FFT) section 21 which transforms a reference signal received from each user terminal into frequency-domain signals, a processing section is provided correspondingly to each CAZAC code. Here, to avoid complicating the drawing, only the processing section concerning a CAZAC code C1 is shown.

Each CAZAC code-specific processing section includes a multiplication processing section 22, an inverse fast Fourier transform (IFFT) section 23, and user-specific processing sections 30-CS1 to 30-CSm. As described earlier, received reference signals are transformed by the FFT section 21 into frequency-domain signals, which are multiplied with the CAZAC code C1 in frequency domain by the multiplication processing section 22. The result of the multiplication is retransformed into a time-domain signal by the IFFT section 23, whereby a cross-correlation signal pursuant to the respective cyclic shift delays assigned to user terminals UE1 to UEm can be obtained as shown in FIG. 4B. From this cross-correlation signal, the user-specific processing sections 30-CS1 to 30-CSm calculate reception qualities for the multiple user terminals UE1 to UEm based on the CAZAC code C1, on the frequency axis, respectively. Here, m is the number of users that can be multiplexed by cyclic shifts of a CAZAC code in question (in this example, the CAZAC code C1).

Each of the user-specific processing sections 30-CS1 to 30-CSm includes a delay profile extraction section 31, a fast Fourier transform (FFT) section 32, a received power calculation section 33, and a reception quality calculation section 34. Only the user-specific processing section 30-CS1 concerning the user terminal UE1 is shown here to avoid complicating the drawing. The configuration and operations of the user-specific processing section 30-CS1 concerning the user terminal UE1 will be described hereinafter as a representative example, since the other user-specific processing sections 30-CS2 to 30-CSm have similar configurations and perform similar operations.

The delay profile extraction section 31 extracts cross-correlation signal waveforms in the vicinity of (within predetermined bounds from) a cross-correlation power peak corresponding to the user terminal UE1 and outputs the extracted portion to the FFT section 32 as a delay profile of the user terminal UE1. For example, assuming that a CAZAC code made by a one-time cyclic shift of the CAZAC code C1 is assigned to the user terminal UE1, the delay profile of the user terminal UE1 should appear at a location in time shifted by that cyclic shift delay. Similarly, a delay profile of each of the other user terminals sequentially appears at a location in time shifted by a cyclic shift delay made for the user terminal in question. The extracted portion of the delay profile is determined by predetermined bounds from the cross-correlation power peak corresponding to each user terminal so that the delay spread range for the corresponding user terminal can be included within the extracted portion to more accurately calculate the received signal power for each frequency.

The thus-obtained delay profile in the vicinity of the peak is transformed to frequency domain by the FFT section 32. That is, the frequency characteristics of the delay profile for the user terminal UE1 are output to the received power calculation section 33. The received power calculation section 33 calculates a received signal power Ps1 for each frequency by squaring the delay profile in frequency domain and outputs the calculated received signal power Ps1 to each of the reception quality calculation section 34 and an all-users' received power integration section 35. In the other user-specific processing sections 30-CS2 to 30-CSm as well, the received power calculation sections 33 calculate received signal powers Ps2 to Psm for each frequency respectively, which are output to the all-users' received power integration section 35. Similar operations are performed in the other CAZAC code-specific processing sections.

In this manner, the all-users' received power integration section 35 receives as input the received signal powers Ps for each frequency, calculated by the respective received power calculation sections 33 of all the user-specific processing sections in every CAZAC code-specific processing section. The all-users' received power integration section 35 sums up the received signal powers Ps and outputs a total received signal power for each frequency to a noise power estimation section 36. The noise power estimation section 36 calculates a total received power from the frequency-domain signals of the received signals transformed by the FFT section 21, and subtracts the total received signal power obtained by the all-users' received power integration section 35 from the calculated total received power, thereby estimating a noise power Pnz. The noise power estimation section 36 outputs the estimated noise power Pnz to each of the reception quality calculation sections 34 of all the user-specific processing sections in every CAZAC code-specific processing section.

The reception quality calculation section 34 calculates the ratio between the received signal power Ps1, input from the received power calculation section 33, and the noise power Pnz, thereby calculating a reception quality for the user terminal UE1. Similar processing is also performed in the other user-specific processing sections 30-CS2 to 30-CSm, whereby reception qualities for respective ones of the user terminal UE2 to UEm are obtained. Moreover, the above-described processing is similarly performed also in the other CAZAC code-specific processing sections. That is, processing similar to the above-described series of processing with respect to the CAZAC code C1 is performed as many times as the number of multiplexed CAZAC codes while the CAZAC codes are changed. Thus, it is possible to estimate reception qualities for all user terminals.

Incidentally, the reception quality estimation device shown in FIG. 4A can be installed in a base station in a radio communications system such as a mobile communications system. Moreover, not only by the hardware-based circuits, similar functions can also be implemented by executing programs on a program-controlled processor such as CPU.

1. Specific example

FIG. 5 is a block diagram showing a specific example of the reception quality estimation device shown in FIG. 4A. Here, it is assumed that a reference extraction section 101 is provided, which extracts reference signals from received signals which are multiplexed as shown in FIG. 2A, for example, and that a fast Fourier transform (FFT) section 102 transforms the reference signals to frequency domain. These received reference signals on frequency axis are output to CAZAC code-specific processing sections 200-C1 to 200-Cn. Hereinafter, to simplify the description, the configuration and operations of the CAZAC code-specific processing sections will be described by taking the CAZAC code-specific processing section 200-C1 as a representative example.

The CAZAC code-specific processing section 200-C1 includes a multiplication processing section 201, a CAZAC code generation section 202, an inverse fast Fourier transform (IFFT) section 203, user-specific processing sections 210-CS1 to 210-CSm, and an all-same-CAZAC-code-users' received power integration section 204. The all-same-CAZAC-code-users' received power integration section 204 sums up the received signal powers of all users based on the same CAZAC code. The CAZAC code generation section 202 of the CAZAC code-specific processing section 200-C1 generates a CAZAC code C1. In the other CAZAC code-specific processing sections 200-C2 to 200-Cn as well, the respective CAZAC code generation sections 202 generate CAZAC codes C2 to Cn, respectively.

The multiplication processing section 201 performs complex multiplication of the frequency-domain received reference signals input from the FFT section 102 with the frequency-domain reference signal (CAZAC code C1) generated by the CAZAC code generation section 202, for each frequency. Through this multiplication processing by the multiplication processing section 201, the received reference signals and the generated reference signal (CAZAC code C1) are multiplied in frequency domain, whereby cross-correlation processing of these signals is performed. The result of this multiplication is transformed to time domain by the IFFT section 203. Thus, a cross-correlation signal is obtained as shown in FIG. 4B that is pursuant to cyclic shift delays respectively assigned to user terminals UE1 to UEm that are based on the CAZAC code C1.

From this cross-correlation signal, the user-specific processing sections 210-CS1 to 210-Csm respectively calculate reception qualities Qcs1 to Qcsm for the multiple user terminals UE1 to UEm multiplexed based on the CAZAC code C1. Here, m is the number of users that can be multiplexed by cyclic shifts of a CAZAC code in question (here, the CAZAC code C1). Each of the user-specific processing sections 210-CS1 to 210-Csm includes a peak detection section 211, a delay profile extraction section 212, a narrowband fast Fourier transform (FFT) section 213, a received power calculation section 214, and a reception quality calculation section 215. Note that the peak detection section 211 and delay profile extraction section 212 correspond to the delay profile extraction section 31 in FIG. 4A. Here, to avoid complicating the drawing, only the user-specific processing section 210-CS1 concerning the user terminal UE1 is shown. Hereinafter, the configuration and operations of the user-specific processing section 210-CS1 concerning the user terminal UE1 will be described as a representative example, since the other user-specific processing sections 210-CS2 to 210-CSm have similar configurations and perform similar operations.

First, the peak detection section 211 detects the location of a peak corresponding to the reception timing of the user terminal UE1, from the signal on the time axis input from the IFFT section 203 (see FIG. 4B). The delay profile extraction section 212 detects a delay profile of the user terminal UE1, according to the detected peak location. Specifically, the delay profile extraction section 212 extracts cross-correlation signal waveforms within a predetermined range from the detected peak location corresponding to the user terminal UE1 and outputs the extracted portion to the narrowband FFT section 213 as a delay profile of the user terminal UE1.

The narrowband FFT section 213 transforms the delay profile of the user terminal UE1 again to frequency domain and outputs the frequency-domain delay profile to the received power calculation section 214. Incidentally, "narrowband" of the narrowband FFT section 213 means that the number of points for Fourier transform is smaller than those of the ordinary FFT section 102 and IFFT section 203. The number of points is a number obtained by dividing the number of points for ordinary FFT by the number of users that can be multiplexed based on the same CAZAC code. The received power calculation section 214 squares the thus-obtained frequency-domain delay profile for each frequency, thereby calculating the value of received signal power at this point in time for the user terminal UE1, for each frequency.

The received signal powers of all user terminals UE1 to UEm based on the CAZAC code C1, obtained in this manner, are summed up by the all-same-CAZAC-code-users' received power integration section 204, whereby a total users' received signal power Psc1 with respect to the CAZAC code C1 is calculated and output to an all-users' received power integration section 222. Similarly, with respect to the other CAZAC codes C2 to Cn as well, the received signal powers of multiplexed user terminals are summed up by the respective all-same-CAZAC-code-users' received power integration sections 204, and obtained total users' received signal powers Psc2 to Pscn with respect to the CAZAC codes C2 to Cn are output to the all-users' received power integration section 222. The all-users' received power integration section 222 sums up the total users' received signal powers Psc1 to Pscn with respect to the CAZAC codes C1 to Cn, whereby an all-users' signal power sum total value Ps is calculated and output to a subtraction processing section 221.

On the other hand, a total received power estimation section 220 calculates a total received power value Ptotal, which is the total power of all received signals, from the frequency-domain received reference signals input from the FFT section 102. The subtraction processing section 221 subtracts the all-users' signal power sum total value Ps from the total received power value Ptotal input from the total received power estimation section 220, thereby calculating a noise power Pnz for each frequency. The subtraction processing section 221 outputs the calculated noise power Pnz to all the reception quality calculation sections 215 in every CAZAC code-specific processing section.

Each reception quality calculation section 215 calculates the ratio between the received signal power Ps of its corresponding user terminal UE and the noise power Pnz input from the subtraction processing section 221. Thus, the signal to noise ratios, which are the reception qualities for the respective user terminals, can be obtained as the reception qualities Qcs1 to Qcsm for the user terminals UE1 to UEm, respectively.

2. Extraction of delay profile

Next, the operations of the peak detection section 211 and delay profile extraction section 212 (corresponding to the delay profile extraction section 31 in FIG. 4A) will be described in more detail. The operations of these sections can also be implemented by executing a program on CPU.

2.1) First example

FIG. 6A is a flow chart showing a first example of the user-specific delay profile extraction operation in the present exemplary embodiment. First, the peak detection section 211 extracts a temporal portion where a delay profile of its corresponding user terminal exists (Step S301). This temporal portion can be uniquely determined based on the cyclic shift amount because users are multiplexed by cyclic shifts of a CAZAC code. For example, assuming that this peak detection section 211 belongs to the user-specific processing section for the user terminal UE1, this extracted temporal portion is the temporal portion corresponding to the user terminal UE1 in FIG. 4B.

Subsequently, the peak detection section 211 squares the cross-correlation signal in the extracted temporal portion, thereby converting the signal into power values (Step S302). The peak detection section 211 then detects the largest value (peak power value) of the power values, as well as the location of this value (peak location) (Step S303).

The delay profile extraction section 212 samples a fixed number of times the cross-correlation signal only in the vicinity of the detected peak location (within predetermined bounds from the peak location as the median), thereby generating a delay profile of the user terminal in question (Step S304).

2.2) Second example

FIG. 6B is a flow chart showing a second example of the user-specific delay profile extraction operation in the present exemplary embodiment. First, the peak detection section 211 detects a peak power value and a peak location as in the above-described Steps S301 to S303 (Steps S401 to S403). In the second example, the generation of a delay profile is controlled depending on whether or not the peak power value is equal to or greater than a predetermined level.
First, the delay profile extraction section 212 determines whether or not the detected peak power value is equal to or greater than a predetermined threshold value (Step S404). When the peak power value is equal to or greater than the predetermined threshold value (Step S404: Yes), the delay profile extraction section 212 samples a fixed number of times the cross-correlation signal only in the vicinity of the detected peak location (within the predetermined region from the peak location as the median) and thereby generates a delay profile of its corresponding user terminal (Step S405). On the other hand, when the peak power value is smaller then the predetermined threshold value (Step S404: No), the delay profile extraction section 212 generates data in which all values are zero, as a delay profile of the user terminal in question (Step S406). Thus, the reception quality for the user terminal in question is made to be zero, which is the lowest value.
As described above, when the peak power value is equal to or greater than the threshold value, it is determined that the reception quality at the user terminal in question is worth subjecting to data rate control, and the same processing as shown in FIG. 6A is performed. However, when the peak power value is smaller than the threshold value, it is determined that the reception quality at the user terminal in question is not enough to be subjected to data rate control, and more bands are allocated to a user exhibiting better reception quality. Thus, it is possible to enhance the total throughput.

3. Aspects of the present invention

As described above, a reception quality estimation device according to the present invention extracts a cross-correlation profile of each of multiple user terminals and calculates a received signal power of the cross-correlation profile of each user terminal in frequency domain. Further, the reception quality estimation device estimates a noise power based on a total received signal power, which is obtained by summing up the received signal powers of all the multiple user terminals, and on a total received power, which is the total power of all received reference signals in frequency domain. Based on the received signal power of each user terminal and the noise power, the reception quality estimation device estimates a reception quality for each user terminal.
The extraction of a cross-correlation is performed as follows. A cross-correlation is transformed to time domain, from which the location in time of a peak corresponding to each user terminal is detected. For each user terminal, a cross-correlation within a predetermined region from the peak location in time is extracted as a cross-correlation profile, which is transformed to frequency domain. Thereby, individual cross-correlation profiles can be generated.
Preferably, a cross-correlation peak value at the peak location in time is further detected, and when the cross-correlation peak value is equal to or greater than a predetermined threshold value, a cross-correlation profile is effectively extracted.
According to the present invention, it is possible to perform reception quality estimation exploiting the property of CAZAC codes. For example, in a radio communications system in which data rate control is performed depending on the reception quality of an uplink or downlink signal, a signal reception quality for each user terminal can be estimated with efficiency from reference signals of multiple user terminals multiplexed. High-speed, lightweight operation can be accomplished because noise reduction processing, such as filtering on the time axis for each user, is not required. Moreover, the amount of processing can be further reduced by using a narrowband fast Fourier transformer (FFT) to transform a cross-correlation profile into frequency-domain signals. Consequently, it is possible to efficiently calculate the frequency property of reception quality for each user terminal.
According to a specific example of the present invention, as shown in FIG. 5, the multiplication processing section 201 multiplies a frequency-domain received signal obtained by the FFT section 102, by a frequency-domain reference signal corresponding to a multiplexed CAZAC code. For each of users multiplexed by cyclic shifts of the same CAZAC code, the peak detection section 211 and delay profile extraction section 212 extracts a delay profile of each user from the time-domain signal obtained by the IFFT section 203, and the narrowband FFT section 213 calculates the frequency characteristics of the received power. Further, the total received power estimation section 220 estimates a total received power, which is the total power of all received signals on the frequency axis, and the subtraction processing section 221 calculates the frequency characteristics of a noise signal by subtracting an all-users' received signal power from the total received power. For each user, the reception quality calculation section 215 calculates the ratio between the received signal power of the user in question and the noise signal on the frequency axis, thereby estimating frequency-domain reception quality for the user in question. If the above-described series of processing is performed as many times as the number of the CAZAC codes multiplexed, it is possible to estimate reception quality for all users.

Hence, according to the present invention, it is possible to efficiently calculate the frequency characteristics of reception quality for each user by using a narrowband FFT, which performs a small amount of processing, without requiring noise reduction processing such as filtering on the time axis for each user.

The present invention can be applied to radio communications system in which data rate control is performed depending on the reception quality of an uplink or downlink signal.

The present invention may be embodied in other specific forms without departing from the spirit or essential characteristics thereof. The above-described exemplary embodiment and examples are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A device for estimating reception quality for each of a plurality of user terminals (UEs), **characterized by** comprising:

    a correlation extractor (31, 211, 212) for extracting correlation between multiplexed reception reference signals received from the plurality of user terminals and a predetermined reference signal sequence, wherein extracted correlation corresponds to each user terminal;
    a received power calculator (33, 214) for calculating received signal power from the extracted correlation corresponding to each user terminal;
    a total received power calculator (35, 204, 222) for calculating total received signal power by summing up the received signal power for all the plurality of user terminals;
    a noise power estimator (36, 220, 221) for estimating noise power based on the total received signal power and total received power of multiplexed reception reference signals; and
    a reception quality calculator (34, 215) for calculating the reception quality of each user terminal based on the received signal power and the noise power.

2. The device according to claim 1, wherein the reception reference signals are multiplexed based on cyclic-shifted ones of the predetermined reference signal sequence.

3. The device according to claim 1 or 2, wherein the predetermined reference signal sequence is a Constant Amplitude Zero Auto-Correlation (CAZAC) sequence.

4. The device according to claim 1 or 2, wherein the correlation extractor comprises:

    a peak detector (211) for detecting a temporal location of a peak corresponding to each user terminal from the correlation;
    a profile extractor (212) for extracting a correlation profile from the correlation, wherein the correlation profile is a time-domain correlation portion having predetermined bounds from the temporal position of the peak; and
    a converter (213) for converting the correlation profile from time domain to frequency domain to generate the extracted correlation.

5. The device according to claim 4, wherein the peak detector further detects a correlation peak value at the temporal location of the peak, wherein the profile extractor extracts the correlation profile when the correlation peak value is not smaller than a predetermined threshold.

6. A method for estimating reception quality for each of a plurality of user terminals, **characterized by** comprising:

    extracting correlation between multiplexed reception reference signals received from the plurality of user terminals and a predetermined reference signal sequence, wherein extracted correlation corresponds to each user terminal;
    calculating received signal power from the extracted correlation corresponding to each user terminal;
    calculating total received signal power by summing up the received signal power for all the plurality of user terminals;
    estimating noise power based on the total received signal power and total received power of multiplexed reception reference signals; and
    calculating the reception quality of each user terminal based on the received signal power and the noise power.

**7.** The method according to claim 6, wherein the reception reference signals are multiplexed based on cyclic-shifted ones of the predetermined reference signal sequence.

**8.** The method according to claim 6 or 7, wherein the predetermined reference signal sequence is a Constant Amplitude Zero Auto-Correlation (CAZAC) sequence.

**9.** The method according to claim 6 or 7, wherein the extracted correlation is extracted by:

detecting a temporal location of a peak corresponding to each user terminal from the correlation;
extracting a correlation profile from the correlation, wherein the correlation profile is a time-domain correlation portion having predetermined bounds from the temporal position of the peak; and
converting the correlation profile as the extracted correlation from time domain to frequency domain.

**10.** The method according to claim 9, further comprising:

detecting a correlation peak value at the temporal location of the peak, wherein the correlation profile is extracted as the extracted correlation when the correlation peak value is not smaller than a predetermined threshold.

**11.** A program for instructing a computer to function as a device for estimating reception quality for each of a plurality of user terminals, **characterized by** comprising:

extracting correlation between multiplexed reception reference signals received from the plurality of user terminals and a predetermined reference signal sequence, wherein extracted correlation corresponds to each user terminal;
calculating received signal power from the extracted correlation corresponding to each user terminal;
calculating total received signal power by summing up the received signal power for all the plurality of user terminals;
estimating noise power based on the total received signal power and total received power of multiplexed reception reference signals; and
calculating the reception quality of each user terminal based on the received signal power and the noise power.

**12.** A base station in a radio communications system, comprising the device according to claim 1 or 2.

**13.** A radio communications system comprising the device according to claim 1 or 2.

FIG. 1
(RELATED ART)

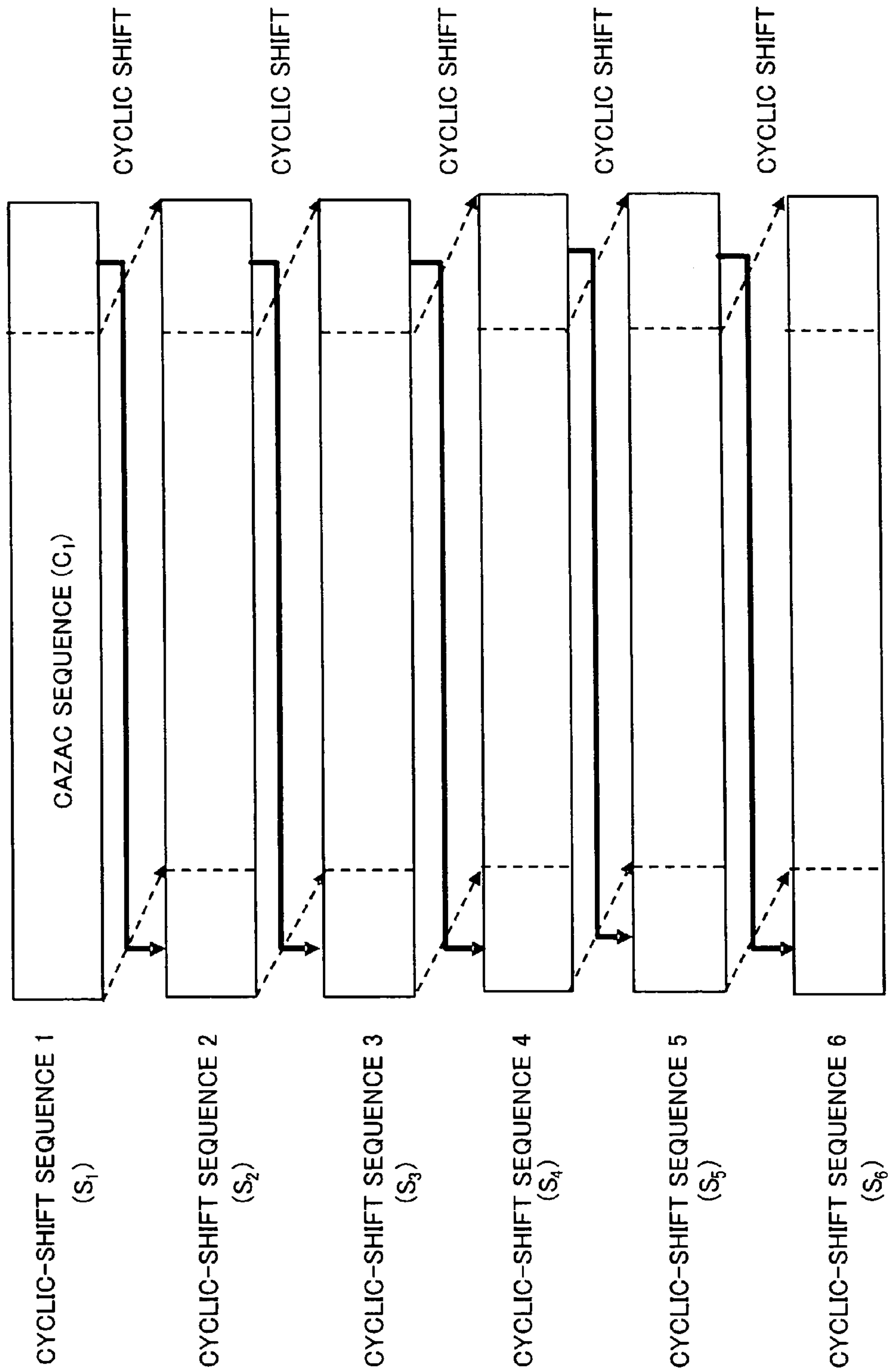

FIG. 2A
(RELATED ART)

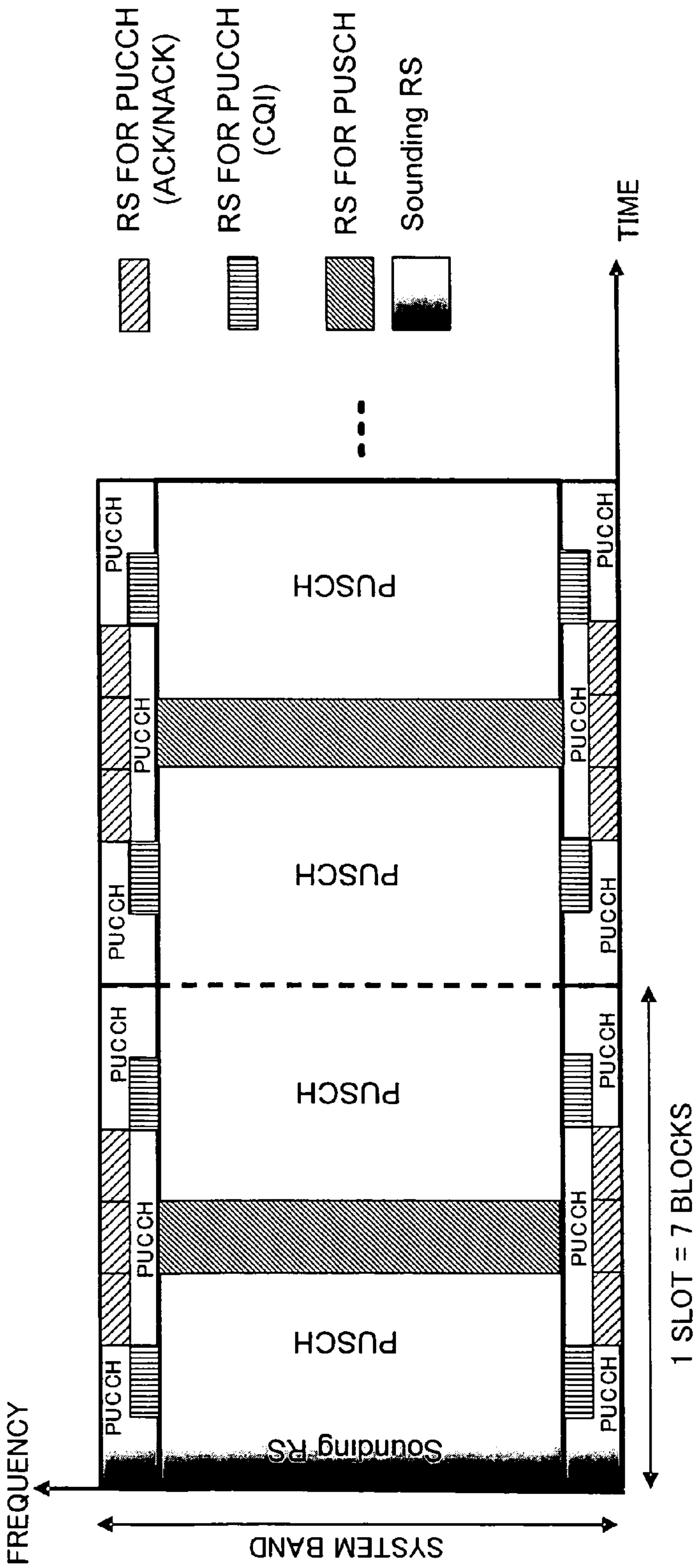


FIG. 2B
(RELATED ART)

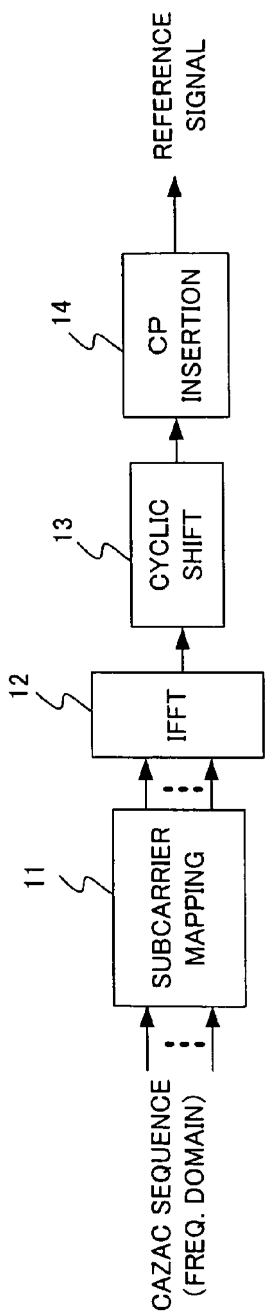

FIG. 3A
(RELATED ART)

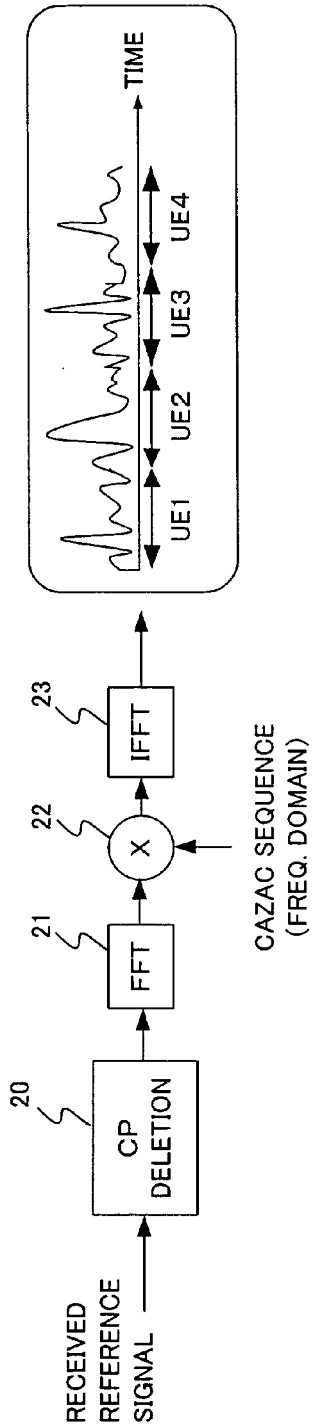


FIG. 3B
(RELATED ART)

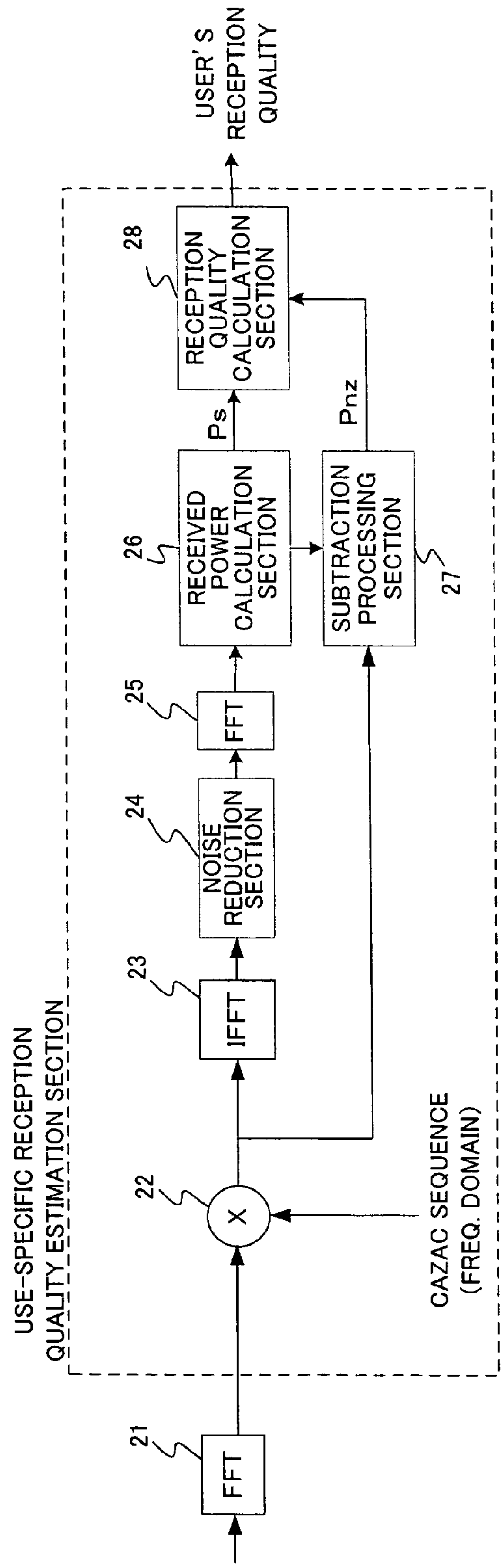

FIG. 4A

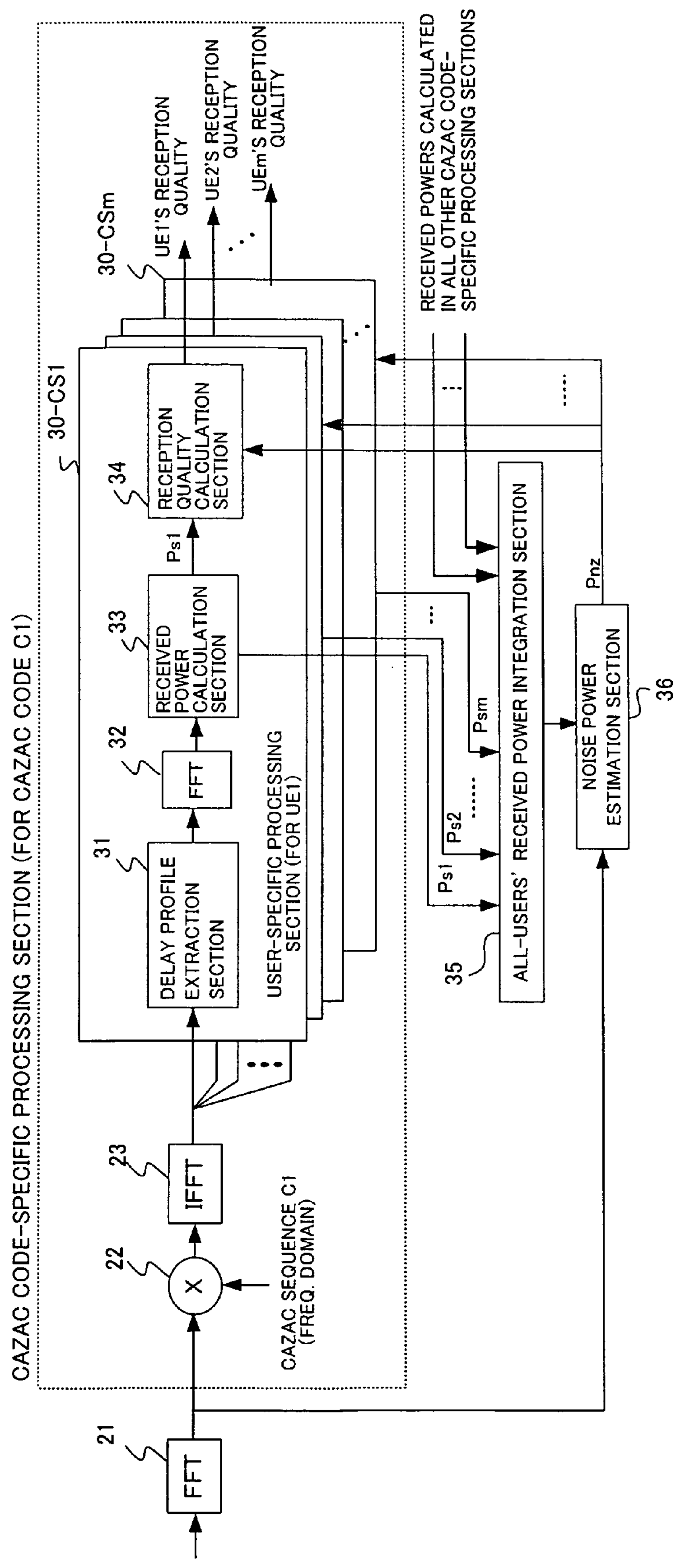
CAZAC CODE-SPECIFIC PROCESSING SECTION (FOR CAZAC CODE C1)
21
FFT
22
CAZAC SEQUENCE C1 (FREQ. DOMAIN)
23
IFFT
30-CS1
30-CSm
31
DELAY PROFILE EXTRACTION SECTION
32
FFT
33
RECEIVED POWER CALCULATION SECTION
34
RECEPTION QUALITY CALCULATION SECTION
USER-SPECIFIC PROCESSING SECTION (FOR UE1)
Ps1
UE1'S RECEPTION QUALITY
UE2'S RECEPTION QUALITY
UEm'S RECEPTION QUALITY
RECEIVED POWERS CALCULATED IN ALL OTHER CAZAC CODE-SPECIFIC PROCESSING SECTIONS
Ps1
Ps2
Psm
35
ALL-USERS' RECEIVED POWER INTEGRATION SECTION
Pnz
NOISE POWER ESTIMATION SECTION
36

FIG. 4B

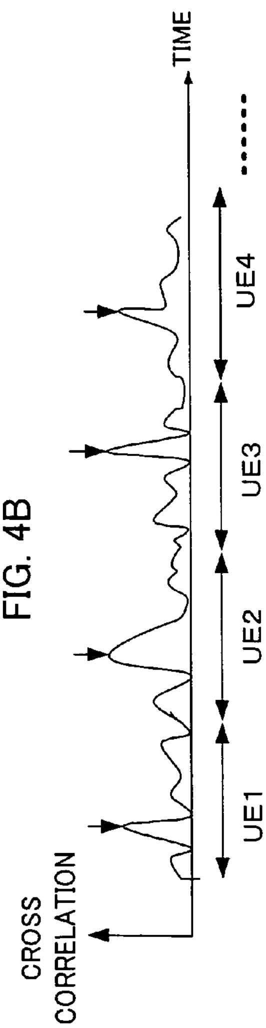
CROSS CORRELATION
TIME
UE1
UE2
UE3
UE4

FIG. 5

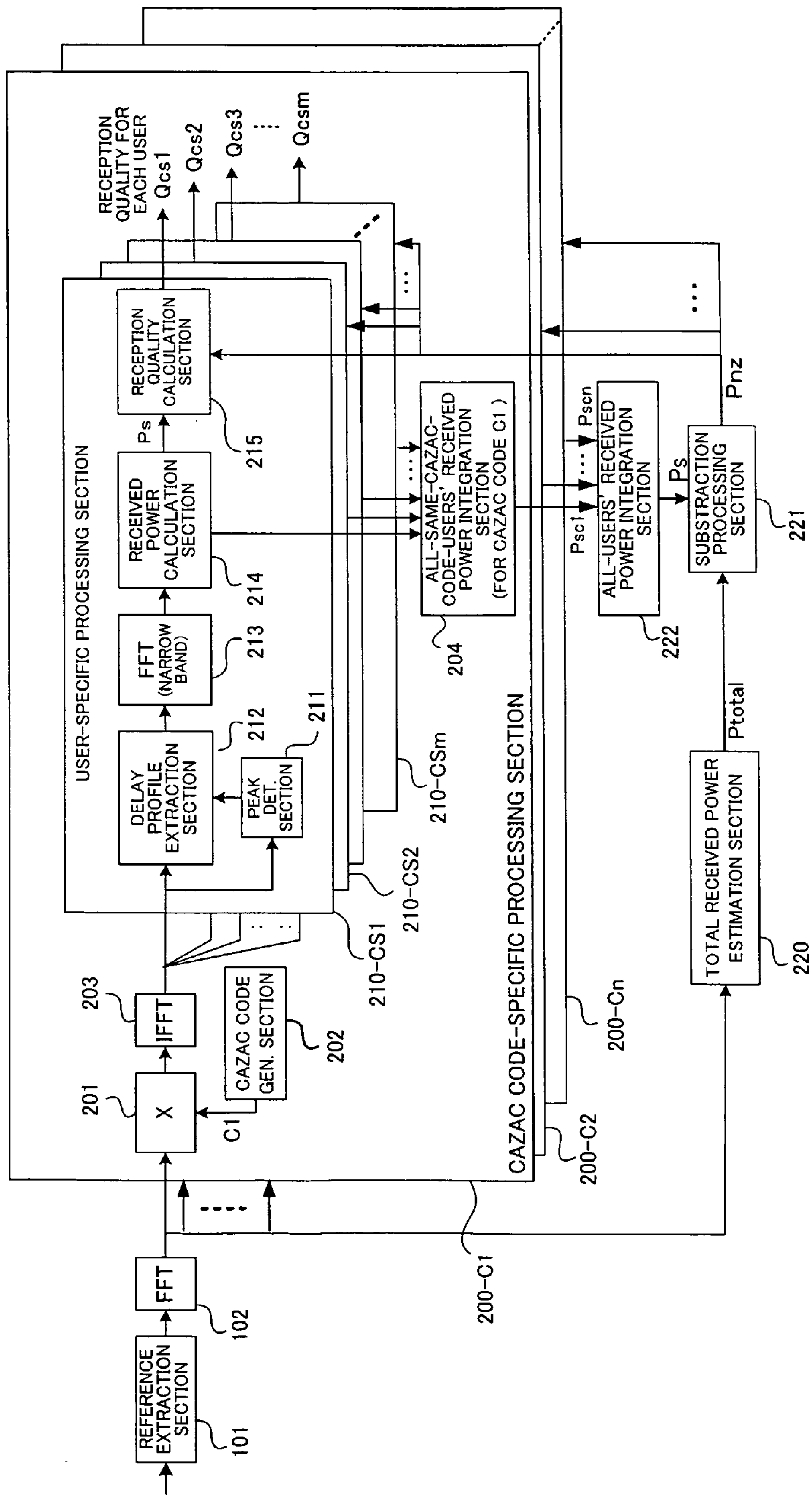
REFERENCE EXTRACTION SECTION
101
FFT
102
200-C1
200-C2
200-Cn
X
201
C1
CAZAC CODE GEN. SECTION
202
IFFT
203
CAZAC CODE-SPECIFIC PROCESSING SECTION
USER-SPECIFIC PROCESSING SECTION
DELAY PROFILE EXTRACTION SECTION
212
PEAK DET. SECTION
211
FFT (NARROW BAND)
213
RECEIVED POWER CALCULATION SECTION
214
Ps
RECEPTION QUALITY CALCULATION SECTION
215
210-CS1
210-CS2
210-CSm
RECEPTION QUALITY FOR EACH USER
Qcs1
Qcs2
Qcs3
Qcsm
ALL-SAME-CAZAC-CODE-USERS' RECEIVED POWER INTEGRATION SECTION (FOR CAZAC CODE C1)
204
Psc1
Pscn
ALL-USERS' RECEIVED POWER INTEGRATION SECTION
222
Ps
SUBSTRACTION PROCESSING SECTION
221
Pnz
TOTAL RECEIVED POWER ESTIMATION SECTION
220
Ptotal

FIG. 6B

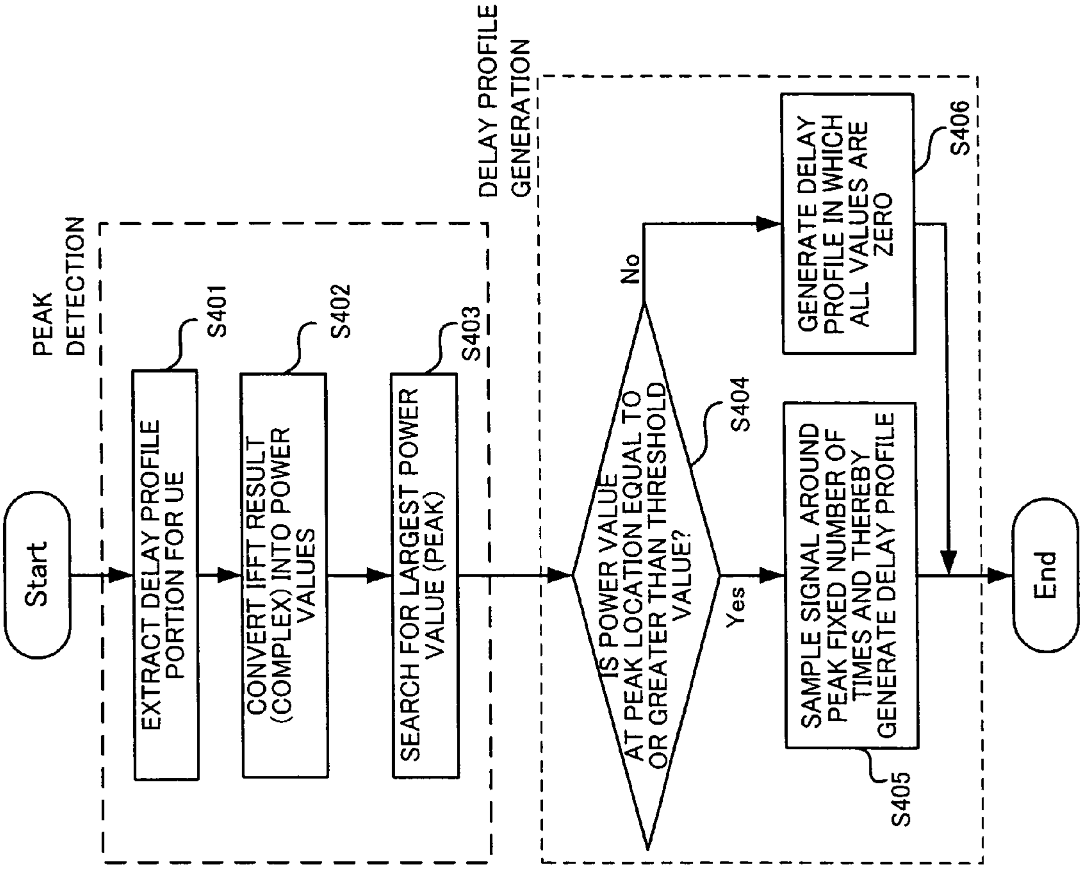
Start
PEAK DETECTION
EXTRACT DELAY PROFILE PORTION FOR UE
S401
CONVERT IFFT RESULT (COMPLEX) INTO POWER VALUES
S402
SEARCH FOR LARGEST POWER VALUE (PEAK)
S403
DELAY PROFILE GENERATION
IS POWER VALUE AT PEAK LOCATION EQUAL TO OR GREATER THAN THRESHOLD VALUE?
S404
No
Yes
GENERATE DELAY PROFILE IN WHICH ALL VALUES ARE ZERO
S406
SAMPLE SIGNAL AROUND PEAK FIXED NUMBER OF TIMES AND THEREBY GENERATE DELAY PROFILE
S405
End

FIG. 6A

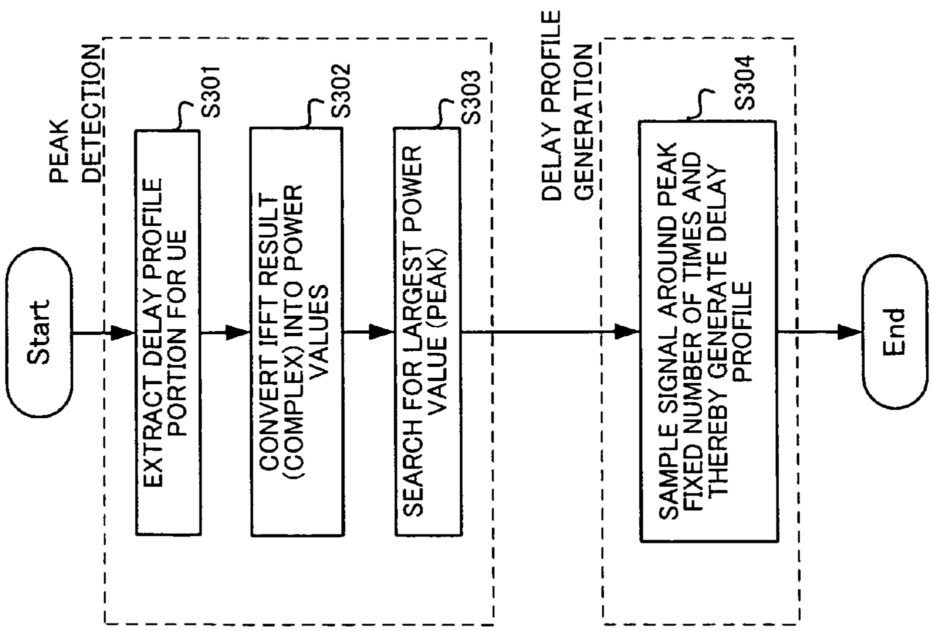
Start
PEAK DETECTION
EXTRACT DELAY PROFILE PORTION FOR UE
S301
CONVERT IFFT RESULT (COMPLEX) INTO POWER VALUES
S302
SEARCH FOR LARGEST POWER VALUE (PEAK)
S303
DELAY PROFILE GENERATION
SAMPLE SIGNAL AROUND PEAK FIXED NUMBER OF TIMES AND THEREBY GENERATE DELAY PROFILE
S304
End

Europäisches Patentamt
European Patent Office
Office européen des brevets

## EUROPEAN SEARCH REPORT

Application Number
EP 08 01 5237

| Category | Citation of document with indication, where appropriate, of relevant passages | Relevant to claim | CLASSIFICATION OF THE APPLICATION (IPC) |
|---|---|---|---|
| A | TERUO KAWAMURA ET AL: "Orthogonal Pilot Channel Using Combination of FDMA and CDMA in Single-Carrier FDMA-Based Evolved UTRA Uplink" WIRELESS COMMUNICATIONS AND NETWORKING CONFERENCE, 2007.WCNC 2007. IEE E, IEEE, PI, 1 March 2007 (2007-03-01), pages 2403-2408, XP031097586 ISBN: 978-1-4244-0658-6 * the whole document * ----- | 1-13 | INV. H04B17/00 H04L25/02 H04L27/26 |
| A | US 2007/036064 A1 (SONG SEONG-WOOK [KR] ET AL) 15 February 2007 (2007-02-15) * abstract; figures 1,4,7,9 * * paragraphs [0003] - [0037] * ----- | 1-13 | |
| A | US 2005/259721 A1 (KAWAMOTO JUNICHIRO [JP] ET AL) 24 November 2005 (2005-11-24) * abstract; figures 3,4 * * paragraphs [0006] - [0017], [0046] - [0057] * ----- | 1-13 | TECHNICAL FIELDS SEARCHED (IPC) |
| D,A | NEC GROUP: "Definition of cyclic shift in code division multiplexing" 3GPP TSG RAN WG1 MEETING 47, no. R1-063202, 6 November 2006 (2006-11-06), - 10 November 2006 (2006-11-10) XP002505590 Riga * the whole document * ----- | 1-13 | H04B H04L |
| A | DE 103 41 546 A1 (SIEMENS AG [DE]) 5 January 2005 (2005-01-05) * abstract; figures 1,2 * * paragraphs [0002] - [0006], [0013] - [0015], [0025], [0030], [0047], [0048] * ----- | 1-13 | |

3

The present search report has been drawn up for all claims

| Place of search | Date of completion of the search | Examiner |
|---|---|---|
| Munich | 28 November 2008 | Galli, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 01 5237

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2008

| Patent document cited in search report | Publication date | Patent family member(s) | Publication date |
|---|---|---|---|
| US 2007036064 A1 | 15-02-2007 | NONE | |
| US 2005259721 A1 | 24-11-2005 | AT 382988 T | 15-01-2008 |
| | | CN 1697428 A | 16-11-2005 |
| | | EP 1596502 A2 | 16-11-2005 |
| | | ES 2296097 T3 | 16-04-2008 |
| | | JP 2005328311 A | 24-11-2005 |
| | | KR 20060047917 A | 18-05-2006 |
| | | US 2008253432 A1 | 16-10-2008 |
| DE 10341546 A1 | 05-01-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007230947 A


### Non-patent literature cited in the description


- **POPOVIC, B. M.** Generalized Chirp-Like Polyphase Sequences with Optimum Correlation Properties. *IEEE Transactions on Information Theory,* July 1992, vol. 38 (4), 1406-1409
- Comparison of Proposed Uplink Pilot Structures For SC-OFDMA. *3GPP R1-060925, Texas Instruments,* March 2006
- Link Analysis and Multiplexing Capability for CQI Transmission. *3GPP R1-071294, Qualcomm Europe,* March 2007